(19) Europäisches Patentamt
European Patent Office
Office européen des brevets

(11) EP 4 296 094 A1

(12) **EUROPEAN PATENT APPLICATION**
published in accordance with Art. 153(4) EPC

(43) Date of publication:
**27.12.2023 Bulletin 2023/52**

(21) Application number: **22759308.4**

(22) Date of filing: **02.02.2022**

(51) International Patent Classification (IPC):
***B60C 19/00*** *(2006.01)*

(52) Cooperative Patent Classification (CPC):
**B60C 19/00**

(86) International application number:
**PCT/JP2022/004000**

(87) International publication number:
**WO 2022/181267 (01.09.2022 Gazette 2022/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.02.2021 JP 2021028544**

(71) Applicant: **Sumitomo Rubber Industries, Ltd.**
**Kobe-shi, Hyogo 651-0072 (JP)**

(72) Inventor: **AOKI, Daichi**
**Kobe-shi, Hyogo 651-0072 (JP)**

(74) Representative: **Manitz Finsterwald Patent- und Rechtsanwaltspartnerschaft mbB**
**Martin-Greif-Strasse 1**
**80336 München (DE)**

(54) **TIRE**

(57) Provided is a tire having high peeling resistance such that an electronic component mounting member unlikely peels off from the surface of the tire even when a large impact is applied on the tire during a high-speed running in a low-temperature environment. In the tire, the electronic component mounting member for incorporating an electronic component is mounted on the surface of a tire inner member, the electronic component mounting member comprises an electronic component storage portion for storing the electronic component and a joint portion having a joint surface for mounting the electronic component mounting member on the surface of the tire inner member, and the complex elastic modulus $E^*_r$ (MPa) of the joint portion at 0°C and the complex elastic modulus $E^*_i$ (MPa) of the tire inner member at 0°C satisfy the following (formula 1).

$$E^*_r / E^*_i < 1 \quad \text{(formula 1)}$$

[Fig. 1]

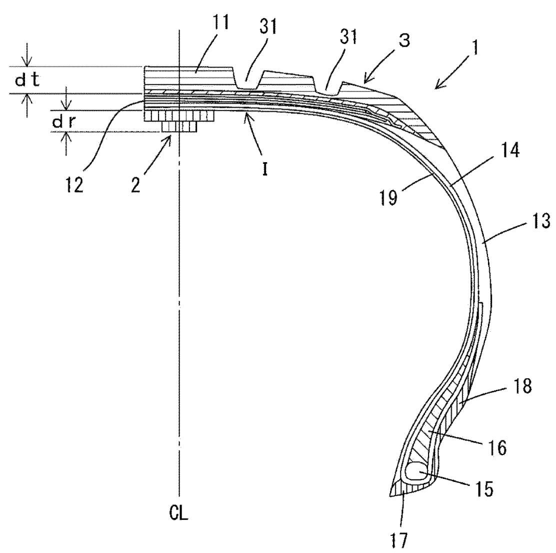


EP 4 296 094 A1

## Description

[TECHNICAL FIELD]

The present disclosure relates to a tire in which an electronic component mounting member containing an electronic component is provided on the surface of a tire inner member arranged in a tire bore.

[BACKGROUND ART]

In order to run a vehicle comfortably, it is considered important to properly manage the air pressure of the installed tires, and in recent years, it is becoming common to install a tire pressure monitoring system (TPMS) inside the tire. (for example, Patent Documents 1 to 4).

[PRIOR ART DOCUMENTS]

[PATENT DOCUMENTS]

[Patent Document 1] JP 2018-016185 A
[Patent Document 2] JP2018-199396 A
[Patent Document 3] JP2019-023594 A
[Patent Document 4] JP2019-026218 A

[SUMMARY OF INVENTION]

[PROBLEM TO BE SOLVED BY THE INVENTION]

A sensor such as a TPMS is generally an electronic component made of metal, so if it is directly attached to a rubber tire, there is a concern that it will peel off when it rolls. Particularly, there is a concern that the electronic component mounting member may peel off from the tire surface when a large impact such as running over a step is applied while the vehicle is running at high speed in a low temperature environment.

Therefore, an object of the present disclosure is to provide a tire having excellent peeling resistance that makes it difficult for electronic components to peel off from the tire surface even when a large impact is applied during high-speed running in a low-temperature environment.

[MEANS FOR SOLVING THE PROBLEM]

The present discloser has conducted intensive studies on how to solve the above problems, found that the above problems can be solved by the disclosure described below, and completed the present disclosure.

This disclosure is a tire in which an electronic component mounting member for incorporating an electronic component is mounted on the surface of the tire inner member, wherein

the electronic component mounting member has an electronic component storage portion that stores the electronic component, and a joint portion that has a joint surface for mounting the electronic component mounting member to the surface of the tire inner member, and
the complex elastic modulus $E^*_r$ (MPa) of the joint portion at 0°C and the complex elastic modulus $E^*_i$ (MPa) of the tire inner member at 0°C satisfy the following (formula 1).

$$E^*_r / E^*_i < 1 \qquad \text{(formula 1)}$$

[EFFECT OF THE INVENTION]

According to the present disclosure, it is possible to provide a tire having excellent peeling resistance in which electronic components are less likely to peel off from the tire surface even when a large impact is applied during high-speed running in a low-temperature environment.

[BRIEF DESCRIPTION of the DRAWING]

FIG.1 is a cross-sectional view showing the configuration of a tire according to an embodiment of the present disclosure.

FIG. 2(A) is a diagram showing the shape of a tread surface of a tire according to another embodiment of the present disclosure, and (B) is a cross-sectional view showing a configuration of the tire according to another embodiment of the present disclosure.

FIG.3(A) is a perspective view of an electronic component mounting member according to an embodiment of the present disclosure as viewed from the side facing a joint surface, and (B) is a perspective view as viewed from the joint surface side.

FIG.4 is a perspective view of an electronic component mounting member according to another embodiment of the present disclosure as viewed from the side facing the joint surface.

[EMBODIMENTS FOR CARRYING OUT THE INVENTION]

[1] Features of the tire according to the present disclosure

First, the features of the tire according to the present disclosure will be explained.

1. Overview

A tire according to the present disclosure is a tire in which an electronic component mounting member for incorporating an electronic component is mounted on the surface of the tire inner member arranged in a tire bore. The electronic component mounting member has an electronic component storage portion that stores the electronic component, and a joint portion that has a joint surface for mounting the electronic component mounting member to the surface of the tire inner member. In addition, the complex elastic modulus $E^*_r$ (MPa) of the joint portion at 0°C and the complex elastic modulus $E^*_i$ (MPa) of the tire inner member at 0°C satisfy the following (formula 1).

$$E^*_r / E^*_i < 1 \qquad \text{(formula 1)}$$

By using the tire as described above, as described later, a tire having excellent peeling resistance can be provided in which the electronic component mounting member is unlikely to be peeled off from the tire surface, even when a large impact is applied during high-speed running in a low-temperature environment.

In the above description, $E^*_r$ and $E^*_i$ are measured according to the provisions of JIS K 6394 using a viscoelasticity measuring device such as "Eplexor (registered trademark)" series manufactured by GABO under conditions of measured temperature: 0 °C, initial strain:10%, dynamic strain: ±1%, frequency: 10 Hz, and deformation mode: elongation.

2. Mechanism of effect manifestation in tires according to the present disclosure

The mechanism of effect manifestation in the tire according to the present disclosure is considered as follows.

Tires are made of rubber, but rubber usually tends to harden at low temperatures, making it difficult to respond flexibly to tire deformation that occurs during running. Therefore, when a large impact is applied to the tire, such as when driving over a step during high-speed running in a low-temperature environment, the impact is transmitted to the electronic component mounting member via the tire inner member, and it is considered there is a risk that the electronic component mounting member will peel off from the tire and come off during running.

Therefore, in the present disclosure, the rigidity of the electronic component mounting member is made lower than that of the tire inner member. Specifically, the complex elastic modulus $E^*_r$ (MPa) of the joint portion at 0°C and the complex elastic modulus $E^*_i$ (MPa) of the tire inner member at 0°C are made to satisfy $E^*_r / E^*_i < 1$ (formula 1). $E^*_r / E^*_i$ is more preferably less than 0.95, further preferably 0.93 or less, further preferably less than 0.9, further preferably 0.86 or less, further preferably 0.85 or less, and further preferably 0.83 or less. The lower limit of $E^*_r / E^*_i$ is not limited, but it is, for example, preferably 0.1 or more, more preferably 0.5 or more, further preferably 0.7 or more, further preferably 0.71 or more, and further preferably 0.72 or more.

Specific $E^*_r$ is, for example, preferably 1 MPa or more, more preferably 10 MPa or more, further preferably 20 MPa or more, further preferably 21 MPa or more, further preferably 23 MPa or more. further preferably 24 MPa or more,

further preferably 25 MPa or more, and further preferably 27 MPa or more. On the other hand, it is preferably 40 MPa or less, more preferably 35 MPa or less, and further preferably 30 MPa or less.

Specific $E^*_i$ is, for example, preferably 1 MPa or more, more preferably 10 MPa or more, further preferably 20 MPa or more, further preferably 27 MPa or more, and further preferably 29 MPa or more. On the other hand, it is preferably 50 MPa or less, more preferably 45 MPa or less, further preferably 40 MPa or less, and further preferably 35 MPa or less.

Thus, when the rigidity of the electronic component mounting member is lower than that of the tire inner member, that is, when $E^*_r / E^*_i < 1$ (formula 1) is satisfied, even when a large impact is applied to the tire, the electronic component mounting member deforms flexibly, and the occurrence of peel off from the tire surface is sufficiently suppressed, since the impact received by the tire inner member is mitigated and transmitted to the electronic component mounting member with low rigidity, and it is considered that excellent peeling resistance can be exhibited.

3. Preferable embodiments of the tire according to the present disclosure.

Moreover, the tire according to the present disclosure preferably adopts the following embodiments.

(1) Loss tangent of tire inner member

As described above, the tire according to the present disclosure satisfies $E^*_r / E^*_i < 1$ (formula 1). At this time, the loss tangent (0°C tan $\delta_i$) of the tire inner member at 0°C is preferably 0.55 or less, more preferably 0.45 or less, further preferably 0.35 or less, and further preferably 0.34 or less. Although the lower limit is not limited, for example, it is preferably 0.1 or more, more preferably 0.2 or more, further preferably 0.3 or more, and further preferably 0.32 or more.

This is because, when the 0°C tan $\delta$ of the tire inner member is large, the heat generation of the tire inner member increases, and the tire inner member tends to soften during high-speed running, as a result, the amplitude of the electronic component mounting member increases, and it is considered that the peeling off resistance effect due to the satisfaction of formula (1) is reduced. By controlling the 0°C tan $\delta$ of the tire inner member to a small value, it is considered that the peeling off resistance effect is synergistically improved in combination with the impact mitigation effect by satisfying (formula 1). Note that this 0°C tan $\delta_i$ can be measured, for example, using a viscoelasticity measuring device such as "Eplexor (registered trademark)" series manufactured by GABO under conditions of measured temperature: 0 °C, initial strain:10%, dynamic strain: $\pm$2.5%, frequency: 10 Hz, and deformation mode: tensile in the same manner as the measurement of $E^*_r$ and $E^*_i$ described above.

(2) Thickness from the inner surface of the carcass layer to the inner surface of the tire inner member

The tire according to the present disclosure has at least one carcass layer radially inward of the tread portion, and the thickness $d_i$ (mm) from the radially inner surface of the radially innermost carcass layer to the radially inner surface of the tire inner member is preferably 0.6 mm or more. The carcass layer and the tire inner member may have various forms. For example, there may be two carcass layers, or another rubber layer may be arranged between the carcass layer and the tire inner member. Then, for example, when another rubber layer is arranged between the carcass layer and the inner liner, which is a tire inner member, the thickness $d_i$ becomes a size including the thickness of this rubber layer.

When the thickness $d_i$ is insufficient, the impact received on the outer surface of the tire will be transmitted to the electronic component mounting member without being sufficiently mitigated, and the peeling resistance effect by satisfying the formula (1) will be reduced.

By setting the thickness $d_i$ to 0.6 mm or more, the impact received on the outer surface of the tire can be sufficiently mitigated, and combined with the impact mitigation effect by satisfying (formula 1), it is considered that the peeling resistance effect is synergistically improved. From this point of view, the thickness $d_i$ is more preferably 0.7 mm or more, further preferably 0.8 mm or more, and further preferably 1.0 mm or more. Although the upper limit is not limited, for example, it is preferably 30 mm or less, more preferably 20 mm or less, and further preferably 10 mm or less.

(3) Glass transition point of electronic component mounting member and tire inner member

Since physical properties such as rigidity and viscosity of rubber and plastic change rapidly at the boundary of the glass transition point (Tg), it is considered that the impacts are likely to be absorbed near Tg. Therefore, it is considered preferable to make the glass transition point $Tg_r$ (°C) of the joint portion higher than the glass transition point $Tg_i$ (°C) of the tire inner member. That is, it is preferable to satisfy $Tg_i - Tg_r < 0$ (formula 2). It is considered that this makes it easier for the joint portions to absorb the impact in the high temperature range. The $Tg_i - Tg_r$ is preferably less than -5 (°C), more preferably less than -10 (°C), and further preferably less than -13 (°C). Although the lower limit of $Tg_i - Tg_r$ is not limited, it is preferably -90 (° C) or more, for example.

Specific Tg $_i$ is, for example, preferably -100°C or higher, more preferably -70°C or higher, further preferably -50°C or higher, and further preferably -35°C or higher. On the other hand, it is preferably 0°C or lower, more preferably -10°C or lower, further preferably -20°C or lower, further preferably -26°C or lower, further preferably -28°C or lower, and further preferably -30°C or lower. Further, the specific $Tg_r$ is similarly, for example, preferably -100°C or higher, more preferably -70°C or higher, and further preferably -50°C or higher. On the other hand, it is preferably 0°C or lower, more preferably -10°C or lower, even more preferably -20°C or lower, even more preferably -22°C or lower, further preferably -25°C or lower, more preferably -26°C or less, more preferably -30°C or less, and even more preferably -31°C or less.

[2] Specific embodiment

Next, specific embodiments of the present disclosure will be described. In the following description, as the examples, a rubber electronic component mounting member is used as the electronic component mounting member, and an inner liner is used as the tire inner member. However, as long as (formula 1) is satisfied, they are not particularly limited, and instead, a plastic electronic component mounting member, or a tire inner member other than an inner liner may be used.

1. Tire configuration

FIG. 1 is a cross-sectional view showing the configuration of a tire according to this embodiment. In FIG. 1, 1 is a tire, 2 is an electronic component mounting member, 11 is the tread, 12 is the belt, 13 is the sidewall, 14 is the carcass layer, 15 is the bead core, 16 is the bead apex, 17 is the chafer, 18 is the clinch, 19 is the tire inner member (inner liner), and 31 is the circumferential groove. Further, I is the tire bore surface, and CL is the center line in the width direction of the tire.

As shown in FIG. 1, the electronic component mounting member 2 is placed on the tire bore surface I, i.e., the surface of the inner liner 19. At this time, in order to obtain monitoring information with high accuracy and stability, the electronic component mounting member is arranged preferably so that, in the tire cross section, the center of the electronic component mounting member is located in the central two regions closest to the tire equatorial plane among the four regions separated by a line extending parallel to the tire radial direction from the line that divides the two tread edges forming the tread contact width into four equal parts. As an example, FIG. 1 shows an example in which the electronic component mounting member 2 is mounted on the central portion in the tire width direction of the bore surface of the tire, that is, on the center line CL. Although not shown, electronic components are incorporated in the electronic component mounting member 2. Here, since the amount of deformation is particularly large on the center line CL of the tire, it is preferable that CL and the center of the electronic component mounting member are deviated, and the deviation width is preferably 1 to 50 mm in the tire axial direction.

FIG. 2 is a drawing of a tire according to another embodiment of the present disclosure, where (A) is a diagram showing the shape of the surface of the tread, and (B) is a cross-sectional view showing the configuration of the tire. In FIG. 2(A), VLs are both grounding ends forming the tread grounding width and virtual lines dividing both grounding ends into four equal parts. In FIG. 2B, cl is the center line of the electronic component mounting member 2, and m is the deviation of the center of the electronic component mounting member from the tire center line CL. Areas 34 and 35 are the areas divided into four equal parts by the virtual line VL, 34 is the area closest to the tire equatorial plane, and 35 is the outside area in the axial direction of the tire. In FIG. 2(A), 32d is a central lateral groove, and 32a is a lateral groove provided with a decorative groove at the outer end in the axial direction of the tire. Moreover, 33 is a sipe.

In the tire of this embodiment, one circumferential groove 31 is formed on the center line CL of the tire on the surface 3 of the tread portion, that is, on the equator, and one circumferential groove 31 is formed on each side thereof. In the tire in which the circumferential groove 31 is formed on the equator in this way, it is preferable to locate the center of the electronic component mounting member within the center 2 regions 34 closest to the tire equatorial plane among four regions separated by virtual lines VL that extend parallel to the tire radial direction from the lines that divide both ground contact edges and the distance between the ground contact edges into four equal parts, specifically, among four regions separated by virtual lines VL extending perpendicular to a profile from the position on the profile of the tire surface that divides both ground contact edges into four equal parts.

Here, "both ground contact edges forming the tread contact width" refers the edges that form the maximum linear distance in the axial direction of the contact surface with a flat plate when the tire is installed on a " standardized rim", "standardized internal pressure" is applied and a "standardized load" is applied after being placed stationary on the flat plate in a vertical position. Specifically, for example, it can be specified by applying a "standardized load" to the tire with ink on the tread surface, pressing it against a cardboard, and transferring it.

Further, whether or not the electronic component mounting member is located in the central two areas closest to the tire equatorial plane, among the four regions divided by equally dividing the region between both ground contact

edges into four regions, can be confirmed, for example, by transcribing the ground contact edge position on the cross section of the section cut out to a width of about 2 cm and dividing the tire into four equal portions along the surface profile.

Regarding the grooves formed on the surface of the tread portion, it can be known from the tread profile obtained by the radius formed on the tread surface of the tire that is installed on the "standardized rim" with "standardized internal pressure" added and placed in an unloaded state. Specifically, for example, the measurement can be easily performed by fixing the bead portion of a section cut out in the tire radial direction with a width of about 2 cm according to the applicable rim width.

The "standardized rim" described above is a rim defined for each tire in the standard system including the standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK". In the case of tires that are not specified in the standard, it refers a rim that can be assembled and can maintain internal pressure, that is, the rim that does not cause air leakage from between the rim and the tire, and has the smallest rim diameter, and then the narrowest rim width.

The "standardized internal pressure" is the air pressure specified for each tire by the above-mentioned standards, and is the maximum air pressure for JATMA, the maximum value described in the table "TIRE LOAD LIMITS AT VARIOUS COLD INFLATION PRESSURES" for TRA, and "INFLATION PRESSURE" for ETRTO.

In addition, the "standardized load" is the load defined for each tire by the standards described above and refers to the maximum mass that can be loaded on the tire, and is the maximum load capacity for JATMA, the maximum value described in "TIRE LOAD LIMITS AT VA RIOUS COLD INFLATION PRESSURES" for TRA, and "LOAD CAPACITY" for ETRTO.

Next, the electronic component mounting member 2 has an electronic component storage portion for storing electronic components, and a joint portion having a joint surface for mounting the electronic component mounting member 2 on the surface of the inner liner 19.

FIG. 3(A) is a perspective view of the electronic component mounting member 2 in the present embodiment as viewed from the side open, and FIG. 3(B) is a perspective view as viewed from the joint surface side. Moreover, FIG. 4 is a perspective view of the electronic component mounting member 2 in another embodiment, viewed from the side facing the joint surface.

In FIGs. 3 and 4, 21 is an electronic component storage portion, 22 is a joint, A is the joint surface to be joined to the inner liner 19, $E_1$ is the upper end portion of the electronic component storage portion 21 facing the joint surface, $E_2$ is the lower end portion of the electronic component housing portion on the joint surface side, and S is a storage space for electronic components. In FIG. 3A, D is the diameter (outer diameter) of the joint surface, T is the thickness of the joint portion, W is the width of the flange, and H is the thickness (height) of the electronic component mounting member.

As shown in FIGS. 3 and 4, the electronic component storage portion 21 is formed in a cylindrical shape and has a storage space S for electronic components inside. A flange-shaped joint portion 22 is formed at the lower end portion $E_2$ of the electronic component storage portion 21, and a joint surface A is formed on the lower surface of the joint portion 22. By forming the joint portion 22 into a flange shape, the size of the joint surface A can be increased and a sufficient adhesion area can be secured with the tire inner member, so that the joint strength can be further increased.

The cross-sectional shape, size and depth of the storage space S are appropriately determined according to the shape and size of the electronic components to be stored. As for the shape of the cross section, for example, in addition to the illustrated circular shape, an elliptical shape, a polygonal shape, or the like can be appropriately set. The side wall of the cylinder is not perpendicular to the joint portion 22, and it is preferable to be formed in a truncated cone shape so that the size of the cross section of the storage space S is larger on the lower end $E_2$ side and smaller on the upper end $E_1$ side.

It is preferable the lower end $E_2$ side of the electronic component storage portion 21 is formed to be open. As a result, for example, the sensor can be brought into direct contact with the inner tire member of the tire, and accurate information can be obtained with higher sensitivity. On the other hand, the upper end portion $E_1$ side is preferably open as shown in FIG. 3(A). As a result, the electronic components can be detachably mounted and can be easily replaced. As shown in FIG. 4, the upper end $E_1$ side may be closed. In this case, the electronic components can be hermetically stored in the storage space S, and placed in a stable environment.

The diameter (outer diameter) D of the joint surface A is preferably 20 mm or more, more preferably 25 mm or more, and further preferably 30 mm or more. On the other hand, it is preferably 60 mm or less, more preferably 55 mm or less, and further preferably 50 mm or less.

The thickness (height) H of the electronic component mounting member is preferably 10 mm or more, more preferably 15 mm or more, and further preferably 20 mm or more. On the other hand, it is preferably 40 mm or less, more preferably 35 mm or less, and further preferably 30 mm or less.

The thickness T of the joint portion is preferably 0.5 mm or more, more preferably 0.6 mm or more, and further preferably 0.8 mm or more. On the other hand, it is preferably 1.4 mm or less, more preferably 1.3 mm or less, and further preferably 1.2 mm or less.

The width W of the flange is preferably 4 mm or more, more preferably 6 mm or more, and further preferably 8 mm or more. On the other hand, it is preferably 16 mm or less, more preferably 14 mm or less, and further preferably 12 mm or less.

The combined weight of the electronic component and the electronic component mounting member is preferably 50 g or less, more preferably 40 g or less, and further preferably 30 g or less.

2. Tire inner member (Inner liner)

Next, an inner liner will be explained as a specific example of the tire inner member, but as described above, the tire inner member is not limited to the inner liner.

(1) Rubber composition constituting tire inner member (inner liner)

In the present embodiment, the tire inner member (inner liner) is formed using, for example, a rubber composition (inner liner rubber composition) in which each compounding material shown below is compounded.

(a) Rubber component

Examples of the rubber component of the rubber composition for inner liners include diene-based rubbers such as isoprene-based rubber, butadiene rubber (BR), styrene butadiene rubber (SBR), styrene isoprene butadiene rubber (SIBR), chloroprene rubber (CR), and acrylonitrile butadiene rubber (NBR); and butyl-based rubbers. A rubber component may be used independently or two or more types may be used together. Among the above rubbers, it is preferable to contain butyl-based rubber as a main rubber component because of its excellent air barrier properties and heat resistance.

(a-1) Butyl-based rubber

As the butyl-based rubber, those commonly used in the tire industry can be suitably used. Specifically, in addition to ordinary butyl rubber (IIR), halogenated butyl rubbers (X-IIR) such as brominated butyl rubber (Br-IIR), chlorinated butyl rubber (Cl-IIR), fluorinated butyl rubber (F-IIR), and brominated isobutylene-p-methylstyrene copolymer (Exxpro 3035 manufactured by Exxon Mobil Chemical). Among these, Br-IIR is preferably used because it facilitates sulfur cross-linking even when it does not contain natural rubber.

In addition, as the butyl-based rubber, a recycled butyl-based rubber can also be used in combination. Recycled butyl-based rubber usually has a high content of non-halogenated butyl rubber (regular butyl rubber), so it can be used in combination with halogenated butyl rubber to ensure good air barrier properties and vulcanization speed. Particularly, when a mixture of a fatty acid metal salt and a fatty acid amide is added to a compound containing regenerated butyl rubber, the performance balance between sheet processability and air barrier property is synergistically significantly improved. Hence, this is preferable.

Recycled butyl-based rubber refers to pulverized rubber products containing a large amount of butyl-based rubber, such as tire tubes and bladders used in the manufacture of tires, or the butyl-based rubber content contained in the pulverized product that is heated and pressurized. The recycled butyl-based rubber includes those that can be re-vulcanized by cutting the cross-linking of the rubber component (desulfurization treatment). Generally, about 50% by weight of the pulverized material is recycled butyl-based rubber. Although sulfur is also contained in the recycled butyl-based rubber, it is deactivated to the extent that it does not contribute to crosslinking.

Commercially available recycled butyl-based rubber includes a tube recycled rubber manufactured by Muraoka Rubber Co., Ltd., which is manufactured by heat-treating a butyl tube under pressure; bladder recycled rubber manufactured by Carquest Co., Ltd., which is produced by pulverizing bladders with an extruder; and the like. These recycled butyl-based rubbers may be used alone or in combination of two or more.

The content of the butyl-based rubber in 100 parts by mass of the rubber component is preferably 70 parts by mass or more, more preferably 75 parts by mass or more, and further preferably 80 parts by mass or more for the reason of excellent air barrier properties. The upper limit is not particularly limited, and it may be 100 parts by mass, but from the viewpoint of sheet processability, it is preferably 95 parts by mass or less, and more preferably 90 parts by mass or less.

Here, the content of the recycled butyl-based rubber in 100 parts by mass of the rubber component is preferably 5 parts by mass or more, and more preferably 8 parts by mass or more, from the viewpoint of the merit of using the recycled butyl-based rubber. On the other hand, it is preferably 30 parts by mass or less, and more preferably 25 parts by mass or less, from the viewpoint of ensuring sufficient air barrier properties and vulcanization speed.

The content of the recycled butyl-based rubber is preferably 7 parts by mass or more, and more preferably 10 parts by mass or more, in 100 parts by mass of the total butyl-based rubber. On the other hand, it is preferably 35 parts by mass or less, and more preferably 30 parts by mass or less.

(a-2) Isoprene rubber

The rubber component preferably contains an isoprene-based rubber, as needed, from the viewpoint of improving sheet processability and air barrier properties in a well-balanced manner.

Examples of isoprene-based rubber include isoprene rubber (IR), natural rubber (NR), and reformed natural rubber. NR also includes deproteinized natural rubber (DPNR), and high-purity natural rubber (UPNR). Reformed natural rubber includes epoxidized natural rubber (ENR), hydrogenated natural rubber (HNR), grafted natural rubber, and the like. As NR, for example, SIR20, RSS#3, TSR20, and the like, which are commonly used in the tire industry can be used. Among them, NR and IR are preferable because they can improve sheet processability and air barrier property in a well-balanced manner.

The content of the isoprene-based rubber in 100 parts by mass of the rubber component is preferably 5 parts by mass or more, and more preferably 10 parts by mass or more, in consideration of the balance between sheet processability and air barrier properties. On the other hand, it is preferably 30 parts by mass or less, and more preferably 25 parts by mass or less.

(a-3) Other rubber

In addition to butyl-based rubber and isoprene-based rubber, as needed, a rubber commonly used in the tire industry, such as a diene-based rubber which includes butadiene rubber (BR), styrene butadiene rubber (SBR), ethylene propylene diene rubber (EPDM), styrene isoprene butadiene rubber (SIBR), chloroprene rubber (CR), acrylonitrile butadiene rubber (NBR), and the like can be used. These may be used alone or in combination of two or more.

(b) Compounding materials other than rubber components

(b-1) Resin component

The rubber composition for the inner liner preferably contains a resin component from the viewpoints of imparting tackiness, adjusting the glass transition temperature (Tg), sheet processability, and the like. Specific resin components include, for example, aromatic hydrocarbon-based resins such as terpene-based resins and coumarone-indene resins; aliphatic hydrocarbon-based resins such as non-reactive alkylphenol resins, C5 resins, and C9 resins; and the like. These may be used in combination of two or more. Among them, a combination of an aromatic hydrocarbon-based resin and an aliphatic hydrocarbon-based resin is preferable. The content of the resin component with respect to 100 parts by mass of the rubber component is preferably, for example, 2 parts by mass or more, and more preferably 3 parts by mass or more. On the other hand, it is preferably 7 parts by mass or less, and more preferably 5 parts by mass or less.

Examples of the terpene resins include polyterpenes, terpene phenols, and aromatic-modified terpene resins. Polyterpene is a resin obtained by polymerizing a terpene compound and a hydrogenated product thereof. The terpene compound is a hydrocarbon having a composition of $(C_5H_8)_n$ or an oxygen-containing derivative thereof, which is a compound having a terpene classified as monoterpenes ($C_{10}H_{16}$), sesquiterpenes ($C_{15}H_{24}$), diterpenes ($C_{20}H_{32}$), etc. as the basic skeleton. Examples thereof include α-pinene, β-pinene, dipentene, limonene, myrcene, alloocimene, osimene, α-phellandrene, α-terpinene, γ-terpinene, terpinolene, 1,8-cineol, 1,4-cineol, α-terpineol, 6-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as hydrogenated terpene resin obtained by hydrogenating the terpene resin. Examples of the terpene phenol include a resin obtained by copolymerizing the above-mentioned terpene compound and the phenol compound, and a resin obtained by hydrogenating above-mentioned resin. Specifically, a resin obtained by condensing the above-mentioned terpene compound, the phenol compound and formalin can be mentioned. Examples of the phenol compound include phenol, bisphenol A, cresol, and xylenol. Examples of the aromatic-modified terpene resin include a resin obtained by modifying a terpene resin with an aromatic compound, and a resin obtained by hydrogenating the above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumarone; and indene.

Coumarone-indene resin is a resin containing coumarone and indene as monomer components constituting the skeleton (main chain) of the resin. Examples of the monomer component contained in the skeleton other than coumarone and indene include styrene, $\alpha$-methylstyrene, methylindene, and vinyltoluene.

The hydroxyl value (OH value) of the coumarone-indene resin is, for example, more than 15 mgKOH/g and less than 150 mgKOH/g. The OH value is the amount of potassium hydroxide required to neutralize acetic acid bonded to a hydroxyl group when 1 g of the resin is acetylated, and is expressed in milligrams. It is a value measured by potentiometric titration method (JIS K 0070: 1992).

The softening point of the coumarone-indene resin is, for example, higher than 30 °C and lower than 160 °C. The softening point is the temperature at which the ball drops when the softening point defined in JIS K 6220-1: 2001 is measured by a ring-ball type softening point measuring device.

Non-reactive alkylphenol resins are those that have alkyl chains at the ortho-position and para-position (especially the para-position) of the hydroxyl group of the benzene ring in the chain, and have a small contribution to the cross-linking reaction during vulcanization. They may be used in combination of two or more.

The "C5 resin" refers to a resin obtained by polymerizing a C5 fraction. Examples of the C5 fraction include petroleum fractions having 4 to 5 carbon atoms such as cyclopentadiene, pentene, pentadiene, and isoprene. As the C5 based petroleum resin, a dicyclopentadiene resin (DCPD resin) is preferably used.

The "C9 resin" refers to a resin obtained by polymerizing a C9 fraction, which may be hydrogenated or modified. Examples of the C9 fraction include petroleum fractions having 8 to 10 carbon atoms such as vinyltoluene, alkylstyrene, indene, and methyl indene. As specific examples thereof, for example, a coumaron indene resin, a coumaron resin, an indene resin, and an aromatic vinyl resin are preferably used. As the aromatic vinyl resin, a homopolymer of $\alpha$-methylstyrene or styrene or a copolymer of $\alpha$-methylstyrene and styrene is preferable because it is economical, easy to process, and excellent in heat generation. A copolymer of $\alpha$-methylstyrene and styrene is more preferred.

The C5C9 resin obtained by copolymerizing the C5 fraction and the C9 fraction can also be used, and hydrogenated or modified resins thereof may also be used. The C5 and C9 fractions include the petroleum fractions described above.

(b-2) Softener

From the viewpoint of sheet processability, the rubber composition for the inner liner preferably contains oil (including extender oil), liquid rubber, or the like as a softener. The total content of these components is preferably 2 parts by mass or more, more preferably 3 parts by mass or more, and further preferably 4 parts by mass or more with respect to 100 parts by mass of the rubber component. Moreover, it is preferably 9 parts by mass or less, more preferably 7 parts by mass or less, and further preferably 6 parts by mass or less. The content of oil also includes the amount of oil contained in the rubber (oil-extended rubber).

The oil is not particularly limited as long as it is commonly used in the tire industry, and includes mineral oil (generally referred to as process oil), vegetable oil, and mixtures thereof. As the mineral oil (process oil), for example, a paraffinic process oil, an aroma-based process oil, a naphthene process oil, or the like can be used. Examples of the vegetable oils and fats include castor oil, cottonseed oil, linseed oil, rapeseed oil, soybean oil, palm oil, coconut oil, peanut oil, rosin, pine oil, pine tar, tall oil, corn oil, rice oil, beniflower oil, sesame oil, olive oil, sunflower oil, palm kernel oil, camellia oil, jojoba oil, macadamia nut oil, and tung oil. These may be used alone or in combination of two or more.

When process oil is used, it is preferable to use one with a low content of aroma components. By using a material with a low content of aroma component, compatibility with butyl rubber is improved, bleeding onto the surface of the rubber sheet is suppressed, and reduction in molding tackiness can be suppressed.

Specific examples of process oil (mineral oil) include products of Idemitsu Kosan Co., Ltd., Sankyo Yuka Kogyo Co., Ltd., Japan Energy Co., Ltd., Olisoy Co., Ltd., H&R Co., Ltd., Toyokuni Seiyu Co., Ltd., Showa Shell Sekiyu Co., Ltd., and Fuji Kosan Co., Ltd.

The liquid rubber mentioned as the softener is a polymer in a liquid state at room temperature (25°C) and is a polymer having a monomer similar to that of solid rubber as a constituent element. Examples of the liquid rubber include farnesene-based polymers, liquid diene-based polymers, and hydrogenated additives thereof.

The farnesene-based polymer is a polymer obtained by polymerizing farnesene, and has a structural unit based on farnesene. Farnesene includes isomers such as $\alpha$-farnesene ((3E, 7E) -3,7,11-trimethyl-1,3,6,10-dodecatetraene) and $\beta$-farnesene (7,11-dimethyl-3-methylene-1, 6,10-dodecatorien).

The farnesene-based polymer may be a homopolymer of farnesene (farnesene homopolymer) or a copolymer of farnesene and a vinyl monomer (farnesene-vinyl monomer copolymer).

Examples of the liquid diene polymer include a liquid styrene-butadiene copolymer (liquid SBR), a liquid butadiene polymer (liquid BR), a liquid isoprene polymer (liquid IR), and a liquid styrene isoprene copolymer (liquid SIR).

The liquid diene polymer has a polystyrene-converted weight average molecular weight (Mw) measured by gel permeation chromatography (GPC) of, for example, more than $1.0 \times 10^3$ and less than $2.0 \times 10^5$. In the present

specification, Mw of the liquid diene polymer is a polystyrene conversion value measured by gel permeation chromatography (GPC).

The content of the liquid rubber (the total content of the liquid farnesene-based polymer, the liquid diene-based polymer, etc.) is, for example, more than 1 part by mass and less than 100 parts by mass with respect to 100 parts by mass of the rubber component.

As the liquid rubber, for example, products of Kuraray Co., Ltd. and Clay Valley Co., Ltd. can be used.

(b-3) Filler

The rubber composition for inner liner preferably contains a filler. Specific examples of filler include carbon black, graphite, silica, calcium carbonate, talc, alumina, clay, aluminum hydroxide, and mica. Among these, carbon black is preferably used as a reinforcing agent, and silica may be used in combination.

(b-3-1) Carbon black

The content of carbon black is, for example, preferably 10 parts by mass or more, more preferably 20 parts by mass or more, and further preferably 30 parts by mass or more with respect to 100 parts by mass of the rubber component. On the other hand, it is preferably 100 parts by mass or less, more preferably 90 parts by mass or less, and further preferably 80 parts by mass or less.

Carbon black is not particularly limited, and examples thereof include furnace blacks such as SAF, ISAF, HAF, MAF, FEF, SRF, GPF, APF, FF, CF, SCF and ECF (furnace carbon black); acetylene black (acetylene carbon black); thermal black such as FT and MT (thermal carbon blacks); and channel black such as EPC, MPC and CC (channel carbon black). These may be used individually by 1 type, and may be used 2 or more types together.

Nitrogen adsorption specific surface area ($N_2SA$) of the carbon black is, from the viewpoint of sheet processability, preferably 10 $m^2/g$ or more and 70 $m^2/g$ or less, and it is more preferably 20 $m^2/g$ or more and 40 $m^2/g$ or less. Dibutyl phthalate (DBP) absorption amount of the carbon black is, for example, more than 50 ml/100 g and less than 250 ml/100 g. The nitrogen adsorption specific surface area of carbon black is measured according to ASTM D4820-93, and the DBP absorption amount is measured according to ASTM D2414-93.

Specific carbon blacks are not particularly limited, and include N550, N660, N762 and the like. Examples of commercially available products include products of Asahi Carbon Co., Ltd., Cabot Japan Co., Ltd., Tokai Carbon Co., Ltd., Mitsubishi Chemical Corporation, Lion Corporation, Shin Nikka Carbon Co., Ltd., Columbia Carbon Co., Ltd., etc. These may be used alone or in combination of two or more.

(b-3-2) Silica

The rubber composition for inner liner may contain silica as needed, and usually it is used together with a silane coupling agent. However, if silica is used, when extruding a sheet, silica that is not covered with a silane coupling agent may re-aggregate, resulting in deterioration of sheet processability. Therefore, it is preferred not to use it if possible.

When silica is used, the BET specific surface area of silica is preferably more than 140 $m^2/g$, and more preferably more than 160 $m^2/g$. On the other hand, it is preferably less than 250 $m^2/g$, and more preferably less than 220 $m^2/g$. Content of the silica with respect to 100 parts by mass of the rubber component is preferably 5 parts by mass or more, more preferably 15 parts by mass or more, and further preferably 25 parts by mass or more. On the other hand, it is preferably 50 parts by mass or less, more preferably 40 parts by mass or less, and frther preferably 30 parts by mass or less. The BET specific surface area mentioned above is the value of $N_2$ SA measured by the BET method according to ASTM D3037-93.

Examples of silica include dry-process silica (anhydrous silica) and wet-process silica (hydrous silica). Among them, wet-process silica is preferable because it has a large number of silanol groups.

As silica, for example, products of Degussa, Rhodia, Tosoh Silica Co., Ltd., Solvay Japan Co., Ltd., Tokuyama Co., Ltd., etc. can be used.

The silane coupling agent is not particularly limited. Examples of the silane coupling agent include

sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;

mercapto-based ones such as 3-mercaptopropyltrimethoxysilane, 2-mercaptoethyltriethoxysilane, and NXT and

NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as γ-glycidoxypropyltriethoxysilane and γ-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane, and 3-chloropropyltriethoxysilane. These may be used alone or in combination of two or more.

Examples of silane coupling agents that can be used include products of Degussa, Momentive, Shinetsu Silicone Co., Ltd., Tokyo Chemical Industry Co., Ltd., Azumax Co., Ltd., Toray Dow Corning Co., Ltd., and the like.
Content of the silane coupling agent is, for example, more than 3 parts by mass and less than 25 parts by mass with respect to 100 parts by mass of silica.

((b-3-3) Other fillers

The rubber composition for inner liner, in addition to the carbon black and silica described above, may further contain fillers commonly used in the tire industry, such as calcium carbonate, talc, alumina, clay, aluminum hydroxide, and mica. Among them, flat aluminum hydroxide is preferable because of its excellent air barrier properties and sheet processability. The content thereof is more than 0.1 part by mass and less than 200 part by mass with respect to 100 part by mass of rubber components.

(b-4) Processing aid

The rubber composition for inner liner preferably contains a mixture of a fatty acid metal salt and a fatty acid amide as a processing aid. This makes it possible to achieve an appropriate balance between sheet processability and air barrier properties.
The fatty acid constituting the fatty acid metal salt is not particularly limited, but a saturated or unsaturated fatty acid having preferably 6 to 28 carbon atoms, more preferably 10 to 25 carbon atoms, and further preferably 14 to 20 carbon atoms can be mentioned. Specific examples include lauric acid, myristic acid, palmitic acid, stearic acid, oleic acid, linoleic acid, linolenic acid, arachidic acid, behenic acid, and nervonic acid. These can be used singly or in combination of two or more. Among them, saturated fatty acids are preferred, and saturated fatty acids having 14 to 20 carbon atoms are more preferred.
Examples of metals constituting the fatty acid metal salt include alkali metals such as potassium and sodium, alkaline earth metals such as magnesium, calcium and barium, zinc, nickel and molybdenum. Among them, zinc and calcium are preferable.
Fatty acid amides may be either saturated fatty acid amides or unsaturated fatty acid amides. Examples of the saturated fatty acid amides include N-(1-oxooctadecyl) sarcosine, stearic acid amide, and behenic acid amide. On the other hand, examples of the unsaturated fatty acid amides include oleic acid amide and erucic acid amide.
Content of the processing aid with respect to 100 parts by mass of the rubber component is preferably 0.8 parts by mass or more, more preferably 1.0 parts by mass or more, and further preferably 1.2 parts by mass or more. On the other hand, it is preferably 3.2 parts by mass or less, more preferably 3.0 parts by mass or less, and further preferably 2.8 parts by mass or less.

(b-5) Anti-aging agent

The rubber composition for inner liner preferably contains an antioxidant. Content of the anti-aging agent is preferably, for example, 0.2 parts by mass or more, and more preferably 0.7 parts by mass or more, with respect to 100 parts by mass of the rubber component. On the other hand, it is preferably 5.0 parts by mass or less, more preferably 3.0 parts by mass or less, and further preferably 2.0 parts by mass or less.
Examples of anti-aging agents include

naphthylamine-based anti-aging agents such as phenyl-α-naphthylamine; diphenylamine-based anti-aging agents such as octylated diphenylamine and 4,4'-bis (α, α'-dimethylbenzyl)diphenylamine;
p-phenylenediamine-based anti-aging agent such as N-isopropyl-N'-phenyl-p-phenylenediamine, N-(1,3-dimethylbutyl)-N'-phenyl-p-phenylenediamine, and N,N'-di-2-naphthyl-p-phenylenediamine;
quinoline-based anti-aging agent such as a polymer of 2,2,4-trimethyl-1,2-dihydroquinolin, 6-ethoxy-2,2,4-trimethyl-1,2-dihydroquinoline, 6-anilino-2,2,4-trimethyl-1,2-dihydroquinoline, and poly-2,2,4-trimethyl-1,2-dihydroquinoline;
monophenolic anti-aging agents such as 2,6-di-t-butyl-4-methylphenol, styrenated phenol; and

bis, tris, polyphenolic anti-aging agents such as tetrakis-[methylene-3-(3',5'-di-t-butyl-4'-hydroxyphenyl)propionate] methane. These may be used alone or in combination of two or more.

As the anti-aging agent, for example, products of Seiko Chemical Co., Ltd., Sumitomo Chemical Co., Ltd., Ouchi Shinko Chemical Industry Co., Ltd., Flexsys Co., Ltd., etc. can be used.

(b-6) Stearic acid

The rubber composition for inner liner may contain stearic acid. Content of stearic acid is, for example, more than 0.5 parts by mass and less than 10.0 parts by mass with respect to 100 parts by mass of the rubber component. As the stearic acid, conventionally known ones can be used. For example, products of NOF Corporation, NOF Corporation, Kao Corporation, Fuji film Wako Pure Chemical Industries, Ltd., and Chiba Fatty Acid Co., Ltd., etc. can be used.

(b-7) Zinc oxide

The rubber composition for inner liner may contain zinc oxide. Content of the zinc oxide is, for example, more than 0.5 parts by mass and less than 10 parts by mass with respect to 100 parts by mass of the rubber component. As the zinc oxide, conventionally known ones can be used, for example, products of Mitsui Mining & Smelting Co., Ltd., Toho Zinc Co., Ltd., Hakusui Tech Co., Ltd., Shodo Chemical Industry Co., Ltd., Sakai Chemical Industry Co., Ltd., etc. can be used.

(b-8) Crosslinking agent and vulcanization accelerator

The rubber composition for inner liner preferably contains a cross-linking agent such as sulfur. Content of the cross-linking agent is, for example, more than 0.1 parts by mass and less than 10.0 parts by mass with respect to 100 parts by mass of the rubber component.
As sulfur, those commonly used in the rubber industry, such as powdered sulfur, precipitated sulfur, colloidal sulfur, insoluble sulfur, highly dispersible sulfur, and soluble sulfur, can be used. These may be used alone or in combination of two or more.
As sulfur, for example, products of Tsurumi Chemical Industry Co., Ltd., Karuizawa Sulfur Co., Ltd., Shikoku Chemicals Corporation, Flexsys Co., Ltd., Nippon Kanryu Kogyo Co., Ltd., Hosoi Chemical Industry Co., Ltd., etc. can be used.
Examples of the cross-linking agent other than sulfur include vulcanizing agents containing a sulfur atom such as Tackirol V200 manufactured by Taoka Chemical Industry Co., Ltd., DURALINK HTS (1,6-hexamethylene-sodium dithiosulfate dihydrate) manufactured by Flexsys, and KA9188 (1,6-bis (N, N'-dibenzylthiocarbamoyldithio) hexane) manufactured by Lanxess; and organic peroxides such as dicumyl peroxide.
The rubber composition for inner liner preferably contains a vulcanization accelerator. Content of the vulcanization accelerator is, for example, more than 0.3 parts by mass and less than 10.0 parts by mass with respect to 100 parts by mass of the rubber component.
Examples of the vulcanization accelerator include

thiazole-based vulcanization accelerators such as 2-mercaptobenzothiazole, di-2-benzothiazolyl disulfide, and N-cyclohexyl-2-benzothiadylsulfenamide;
thiuram-based vulcanization accelerators such as tetramethylthiuram disulfide (TMTD), tetrabenzyltiuram disulfide (TBzTD), and tetrakis (2-ethylhexyl) thiuram disulfide (TOT-N);
sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, N-oxyethylene-2-benzothiazolesulfenamide, and N,N'-diisopropyl-2-benzothiazolesulfenamide; and
guanidine-based vulcanization accelerators such as diphenylguanidine, di-ortho-tolylguanidine and ortho-tolylbiguanidine. These may be used alone or in combination of two or more.

(2) Preparation of tire inner member (inner liner)

The rubber composition for inner liner is produced by a general method, for example, a manufacturing method including a base kneading step of kneading a rubber component with a filler such as carbon black, and a finish kneading step of kneading the kneaded product obtained in the base kneading step and a cross-linking agent.
Kneading can be performed using a known (sealed) kneader such as a banbury mixer, a kneader, or an open roll.
The kneading temperature of the base kneading step is, for example, higher than 50 °C and lower than 200

°C, and the kneading time is, for example, longer than 30 seconds and shorter than 30 minutes. In the base kneading process, in addition to the above components, compounding agents conventionally used in the rubber industry, such as softeners such as oil, stearic acid, zinc oxide, antiaging agents, waxes, and vulcanization accelerators, may be appropriately added and kneaded as needed.

In the finish kneading step, the kneaded product obtained in the base kneading step and the cross-linking agent are kneaded. The kneading temperature of the finish kneading step is, for example, higher than room temperature or and lower than 80 °C, and the kneading time is, for example, longer than 1 minute and shorter than 15 minutes. In the finish kneading step, in addition to the above components, a vulcanization accelerator, zinc oxide and the like may be appropriately added and kneaded as needed.

At this time, the E* and tan δ at 0 °C of the inner liner can be adjusted so as to satisfy the above conditions, for example, by adjusting the compounding amounts of fillers and adjusting the compounding amounts of oil and resin components. Further, for example, the glass transition temperature ($Tg_i$) of the inner liner can be adjusted, for example, by adjusting the type and compounding amount of the resin component. For example, E * and tan δ can be increased by increasing the amount of filler, and Tg can be increased by compounding a resin having a higher Tg than the rubber component.

An inner liner is produced by molding the obtained rubber composition for inner liner into a predetermined shape.

3. Electronic component mounting member

Next, a rubber electronic component mounting member will be described as an example of a specific electronic component mounting member, but as described above, electronic component mounting member is not limited to the member made from rubber.

(1) Rubber composition constituting an electronic component mounting member

The rubber composition constituting the electronic component mounting member (rubber composition for electronic component mounting member) can be formed using the same compounding materials as in the case of the rubber composition for the inner liner. However, a rubber component different from the rubber composition for the inner liner may be used. For example, BR having a low Tg and excellent low-temperature properties and NBR having excellent mechanical properties may be used as main rubber components. In addition, for example, other diene-based rubbers, such as isoprene-based rubber, SBR, SIBR, and CR may be used as appropriate.

When BR and NBR are used as rubber components, content of BR in 100 parts by mass of the rubber component is, for example, 40 to 60 parts by mass, and content of NBR is, for example, 40 to 60 parts by mass.

Here, the weight average molecular weight of BR is, for example, more than 100,000 and less than 2,000,000. The vinyl bond amount of BR is, for example, more than 1% by mass and less than 30% by mass. The cis content of BR is, for example, more than 1% by mass and 98% by mass or less. The trans content of BR is, for example, more than 1% by mass and less than 60% by mass. The cis content can be measured by infrared absorption spectrometry.

The BR is not particularly limited, and BR with a high cis content (90% or more of cis content), BR with a low cis content, BR containing syndiotactic polybutadiene crystals, and the like can be used. BR may be either unmodified BR or modified BR. As modified BR, for example, BR modified with a compound (modifying agent) represented by the following formula can be used.

[Chemical 1]

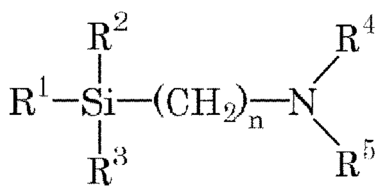

In the formula, $R^1$, $R^2$ and $R^3$ are the same or different and represent alkyl group, alkoxy group, silyloxy group, acetal group, carboxyl group (-COOH), mercapto group (-SH) or derivatives thereof. $R^4$ and $R^5$ are the same or different and represent hydrogen atoms or alkyl group. $R^4$ and $R^5$ may be combined to form a ring structure with nitrogen atoms, n represents an integer.

Examples of modified BR modified with the compound (modifying agent) represented by the above formula

include BR whose polymer terminal (active terminal) has been modified with the compound represented by the above formula.

As $R^1$, $R^2$ and $R^3$, an alkoxy group is suitable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is suitable, n is preferably 1 to 5, more preferably 2 to 4, and further preferably 3. Further, when $R^4$ and $R^5$ are combined to form a ring structure together with a nitrogen atom, a 4- to 8-membered ring is preferable. The alkoxy group also includes a cycloalkoxy group (cyclohexyloxy group, and the like) and an aryloxy group (phenoxy group, benzyloxy group, and the like).

Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified BR, a modified BR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;
polyglycidyl ethers of aromatic compounds having two or more phenol groups such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4' -diglycidyl-diphenylmethylamine, and 4,4'-diglycidyl-dibenzylmethylamine;
diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane;
amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;
epoxy group-containing silane compounds such as 1,3-bis-(glycidyloxypropyl) -tetramethyldisiloxane, and (3-glycidyloxypropyl) - pentamethyldisiloxane;
sulfide group-containing silane compound such as (trimethylsilyl) [3-(trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3- (methyldimethoxysilyl) propyl] sulfide, (trimethylsilyl) [3- (methyldiethoxysilyl) propyl] sulfide, (trimethylsilyl) [3- (methyldipropoxysilyl) propyl] sulfide, and (trimethylsilyl) [3- (methyldibutoxysilyl) propyl] sulfide;
N-substituted aziridine compound such as ethyleneimine and propyleneimine;
alkoxysilanes such as methyltriethoxysilane, N, N-bis (trimethylsilyl) - 3-aminopropyltrimethoxysilane, N, N-bis (trimethylsilyl) -3-aminopropyltriethoxysilane, N, N-bis (trimethylsilyl) aminoethyltrimethoxysilane, and N, N-bis (trimethylsilyl) aminoethyltriethoxysilane;
(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis- (tetraethylamino) benzophenone;
benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;
N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;
N- substituted piperidone such as methyl-2-piperidone, N-vinyl-2-piperidone, and N-phenyl-2-piperidone;
N-substituted lactams such as N-methyl -ε-caprolactam, N-phenyl-ε-caprolactum, N-methyl-ω-laurilolactum, N-vinyl-ω-laurilolactum, N-methyl-β-propiolactam, and N-phenyl-β-propiolactam; and
N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 - bis(methylethylamino)-4-heptanone. The modification with the above compound (modifying agent) can be carried out by a known method. These modified BRs may be used alone or in combination of two or more.

As the BR, for example, products of Ube Industries, Ltd., JSR Corporation, Asahi Kasei Co., Ltd., and Nippon Zeon Co., Ltd., etc. can be used.

Also, NBR is not particularly limited, and NBR having a corresponding amount of bound acrylonitrile can be used according to the required properties.

(2) Preparation of rubber composition for electronic component mounting member

The rubber composition for an electronic component mounting member can be produced in the same manner as the production of the tire inner member (inner liner) described above. At this time, as in the production of the tire inner member (inner liner), by adjusting the compounding amount of filler such as carbon black and adjusting the compounding amounts of oil and resin components, E* at 0°C can be adjusted to satisfy the above conditions, and the glass transition temperature ($Tg_r$) can be adjusted by adjusting the type and compounding amount of the resin component.

(3) Production of electronic component mounting member

Next, the obtained rubber composition for electronic component mounting members is heated and pressurized into a predetermined shape in a vulcanizer to produce an electronic component mounting member. The vulcanization step can be carried out by applying known vulcanization means. The vulcanization temperature is, for example, higher than 120°C and lower than 200°C, and the vulcanization time is, for example, longer than 5 minutes and shorter than 15 minutes. Although the housing portion and the joint portion of the electronic component mounting member may be made of different materials, they are preferably integrally formed of the same material.

4. Manufacture of tires

(1) Manufacture of tires before mounting electronic component mounting members

In the present disclosure, the tire before mounting the electronic component mounting member can be manufactured by a normal method. That is, first, an unvulcanized tire is produced by molding the inner liner (tire inner member) produced as described above together with other tire members by a normal method on a tire building machine.

Specifically, the inner liner manufactured as a member for ensuring the airtightness of the tire, the carcass as a member that withstands the load, impact, and filling air pressure that the tire receives, and the bead portion as a member for fixing both ends of the carcass on both side edges and fixing the tire to the rim are arranged on a forming drum, and the carcass portion is folded back to wrap the bead portion. Next, a bead reinforcing layer, a clinch portion, and a sidewall, as a member that protects the bead portion and the carcass and withstands bending, are adhered so as to be outside the bead portion in the tire width direction, and these are formed into a toroid shape. After that, a belt or the like is wound around the central portion of the outer circumference as a member that strongly tightens the carcass and increases the rigidity of the tread, and the tread is further arranged on the outer circumference to produce an unvulcanized tire.

Thereafter, the produced unvulcanized tire is heated and pressurized in a vulcanizer to obtain a tire to which the electronic component mounting member is not mounted. The vulcanization step can be carried out by applying known vulcanization means. The vulcanization temperature is, for example, higher than 120 °C and lower than 200 °C, and the vulcanization time is, for example, longer than 5 minutes and shorter than 15 minutes.

(2) Mounting of electronic component mounting member

Next, using a predetermined adhesive, a separately manufactured electronic component mounting member is mounted to the central portion of the inner member of the manufactured tire in the tire width direction, thereby completing the manufacturing of the tire according to the present embodiment. The electronic component is housed in the electronic component mounting member after production. Further, instead of mounting the electronic component mounting member to the vulcanized tire with an adhesive, the unvulcanized tire and the electronic component mounting member may be vulcanized at the same time. However, since it becomes difficult to replace the electronic component mounting member, it is preferable to mount the electronic component mounting member to the vulcanized tire with an adhesive.

The surface of the tire inner member (tire bore) is generally coated with a release agent to maintain releasability during vulcanization. Preferably, the electronic component mounting member is mounted with an adhesive, after removing the release agent. The following two methods are conceivable for removing the release agent.

The first method is to scrape off the release agent using a polishing machine such as a buffing machine (buffing). By using a polishing machine, large unevenness is eliminated and the surface is roughened to ensure a sufficient contact area for bonding.

The second method is to scrape off the release agent using a laser or the like (laser polishing), which enables polishing with higher precision than a polishing machine and enables making the contact surface with the electronic

component mounting member smooth. Therefore, it is considered that the peeling resistance is excellent.

Note that the laser polishing method can be distinguished from other polishing methods by confirming that the step of the tire bore at the interface between the polished portion and the unpolished portion is 200 μm or less. The non-polished portion includes a release agent layer during vulcanization.

As another method, when applying a release agent to the tire bore surface of an unvulcanized tire, the release agent is not applied only to the place where the electronic component mounting member is to be mounted, and after vulcanization, an electronic component mounting member may be mounted on the place.

The adhesive can be appropriately selected and used from commercially available rubber adhesives commonly used for bonding rubber members, such as acrylic rubbers, chloroprene rubbers, styrene-butadiene rubbers, and butyl rubbers. However, it is preferable to use a rubber-based adhesive that can maintain its softness even after curing.

5. Usage

The tire of the present disclosure described above may be a pneumatic tire or a non-pneumatic tire. In addition, it can be applied to various uses such as tires for passenger cars, tires for large vehicles, tires for two-wheeled vehicles, tires for agriculture, tires for mining, and tires for aircraft. It is most preferably applied to pneumatic passenger car tires. The term "passenger car tire" as used herein refers to a tire that is installed on a four-wheeled vehicle and has a maximum load capacity of 1000 kg or less.

The maximum load capacity is not particularly limited as long as it is 1000 kg or less, but in general, as the maximum load capacity increases, the tire weight tends to increase and the impact transmitted to the tire tends to increase. Therefore, it is preferably 900 kg or less, more preferably 800 kg or less, and further preferably 700 kg or less.

The tire weight is preferably 20 Kg or less, more preferably 15 Kg or less, and further preferably 12 Kg or less, 10 Kg or less, or 8 Kg or less, from the viewpoint of softening the impact transmitted to the tire. The term "tire weight" as used herein includes the weight of the electronic component and the electronic component mounting member. When sealant, sponge, etc. are provided in the tire bore, the tire weight also includes the weights of them.

[EXAMPLES]

Hereinafter, the present disclosure will be described more specifically based on examples.

In the following examples, a tire (size: 195/65R15) having the configuration shown in FIG. 1 was manufactured, and the peeling resistance of the electronic component mounting member from the tire inner member (inner liner) was evaluated.

1. Manufacture of inner liners

(1) Manufacture of rubber composition for inner liner

First, a rubber composition for inner liner was produced.

(a) Compounding material

First, each compounding material shown below was prepared.

(a-1) Rubber component
Butyl rubber: Chlorobutyl HT1066 (chlorinated butyl rubber) manufactured by Exxon Chemical Co. Ltd.
(a-2) Compounding materials other than rubber components

(a-2-1) Carbon black: Show Black N660 manufactured by Cabot Japan Co., Ltd. ($N_2SA$: 35$m^2$ / g)
(a-2-2) Oil: Process X-260 manufactured by Japan Energy Co., Ltd.
(a-2-3) Resin component-1: Marukaretsu T-100AS manufactured by Maruzen Petrochemical Co., Ltd. (C5 petroleum resin)
(a-2-4) Resin component-2: Petrotac 100V manufactured by Tosoh Corporation (C5 petroleum resin)
(a-2-5) Processing aid: WB16 manufactured by Structol Co., Ltd. (a mixture of a fatty acid metal salt (saturated fatty acid calcium having 14 to 20 carbon atoms) and a fatty acid amide)
(a-2-6) Stearic acid: TSUBAKI manufactured by NOF Corporation (a-2-7) Zinc oxide: Two types of zinc oxide manufactured by Mitsui Mining & Smelting Co., Ltd.
(a-2-8) Sulfur: HK-200-5 (containing 5% by mass of oil) manufactured by Hosoi Chemical Co., Ltd.
(a-2-9) Vulcanization accelerator: Nocceler DM manufactured by Ouchi Shinko Chemical Industry Co., Ltd. (di-2-benzothiazolyl disulfide)

(b) Manufacture of rubber composition for inner liner

Using a banbury mixer, materials other than zinc oxide, sulfur and a vulcanization accelerator were kneaded at 150 °C for 5 minutes according to the formulation contents shown in Table 1 to obtain a kneaded product. Each compounding quantity is part by mass. For convenience, Table 1 also shows $E^*_i$, tan $\delta_i$, and $Tg_i$ measured later.

[Table 1]

| | Formulation No. | | | | | | | |
|---|---|---|---|---|---|---|---|---|
| | 1 | 2 | 3 | 4 | 5 | 6 | 7 | 8 |
| Butyl rubber | 100 | 100 | 100 | 100 | 100 | 100 | 100 | 100 |
| Carbon black | 70 | 65 | 40 | 40 | 60 | 50 | 40 | 30 |
| Oil | 5 | 5 | 0 | 0 | 7 | 5 | 5 | 5 |
| Resin component-1 | 5 | 5 | 3 | 0 | 5 | 5 | 5 | 0 |
| Resin component-2 | 0 | 0 | 0 | 5 | 0 | 0 | 0 | 3 |
| Processing aid | 2 | 2 | 2 | 2 | 2 | 2 | 2 | 2 |
| Stearic acid | 1 | 1 | 1 | 1 | 1 | 1 | 1 | 1 |
| Zinc oxide | 1 | 1 | 3 | 3 | 1 | 1 | 1 | 1 |
| Sulfur | 0.6 | 0.6 | 0.6 | 0.6 | 0.6 | 0.6 | 0.6 | 0.6 |
| Vulcanization accelerator | 1 | 1 | 1 | 1 | 1 | 1 | 1 | 1 |
| $E^*_i$ (MPa) | 35.0 | 27.0 | 29.0 | 29.0 | 20.0 | 15.0 | 13.0 | 10.0 |
| 0°C tan $\delta_i$ | 0.65 | 0.55 | 0.34 | 0.32 | 0.60 | 0.50 | 0.35 | 0.33 |
| Tgi (°C) | -30.0 | -28.0 | -26.0 | -35.0 | -25.0 | -24.0 | -23.0 | -32.0 |

Next, zinc oxide, sulfur and a vulcanization accelerator were added to the resulting kneaded material and kneaded at 80 °C for 5 minutes using an open roll to obtain a rubber composition for an inner liner.

2. Manufacture of an electronic component mounting material

Separately, an electronic component mounting member was manufactured.

Specifically, except that BR (UBEPOL BR130B manufactured by Ube Industries, Ltd.) and NBR (Nipol DN401LL manufactured by Nippon Zeon Co., Ltd.) were used, the same compounding materials as the rubber composition for the inner liner were used as rubber components and kneaded in the same manner according to the compounding content shown in Table 2, to obtain a rubber composition for an electronic component mounting member. For convenience, Table 2 also shows $E^*_r$ and $Tg_r$ measured later.

[Table 2]

| | Formulation No. | | | | |
|---|---|---|---|---|---|
| | 9 | 10 | 11 | 12 | 13 |
| BR | 50 | 40 | 45 | 35 | 25 |
| NBR | 50 | 60 | 55 | 65 | 75 |
| CB | 30 | 30 | 30 | 30 | 30 |
| Oil | 3 | 3 | 3 | 3 | 3 |
| Resin 1 | 1 | 1 | 1 | 1 | 1 |
| Resin 2 | 4 | 3 | 4 | 4 | 4 |

(continued)

| | Formulation No. | | | | |
|---|---|---|---|---|---|
| | 9 | 10 | 11 | 12 | 13 |
| Processing aid | 1 | 1 | 1 | 1 | 1 |
| Stearic acid | 2 | 2 | 2 | 2 | 2 |
| Zinc oxide | 3 | 3 | 3 | 3 | 3 |
| Sulfur | 2 | 2 | 2 | 2 | 2 |
| Vulcanization accelerat or | 1 | 1 | 1 | 1 | 1 |
| $E^*_r$ (MPa) | 25.0 | 27.0 | 24.0 | 23.0 | 21.0 |
| $Tg_r$ (°C) | -31.0 | -25.0 | -30.0 | -26.0 | -22.0 |

Next, the obtained rubber composition for an electronic component mounting member was vulcanized and molded to a shape as shown in FIG. 3, that is, a shape having the storage space S with a circular cross section, and having size of the diameter (outer diameter) D of the joint surface A of 40 mm, the thickness (height) H of 25 mm, the thickness T of the joint portion of 1 mm, and the width W of the flange of 10 mm, to produce an electronic component mounting member.

3. Manufacture of test tires

(1) Manufacture of tires before mounting electronic component mounting members

First, the tire was manufactured before the electronic component mounting member was mounted.

Specifically, rubber compositions having respective formulations shown in Tables 3 to 5 were molded to obtain inner liners having respective thicknesses shown in Tables 3 to 5, which were bonded together with other tire members to form an unvulcanized tire. Then, the tire was press vulcanized for 10 minutes at 170 °C to obtain a tire before mounting the electronic component mounting member. Here, since the inner liner is directly bonded to the surface of the carcass layer, the thickness $d_i$ from the surface of the carcass layer to the surface of the tire inner member on the tire bore side is the same as the thickness of the inner liner.

(2) Manufacture of test tires

Next, on the tire bore surface before mounting each electronic component mounting member, the locations for mounting electronic component mounting member shown in Tables 3 to 5 were polished by the polishing method shown in Tables 3 to 5 to remove release agent. After removing the release agent, an electronic component mounting member storing a predetermined electronic component in the storage space in advance was mounted using an adhesive to manufacture test tires of Examples 1 to 6 and Comparative Examples 1 to 5. The width m of deviation of the center of the electronic component mounting member from the center line CL was set to 2 mm. As the adhesive, a commercially available chloroprene rubber adhesive was used.

In the laser polishing, a laser beam adjusted to a movement pitch of 60 $\mu$m and a movement speed of 4000 mm/s is used to reciprocate the mounting location of the electronic component mounting member several times to scrape off the release agent and rubber surface, resulting in a step of 95 $\mu$m.

4. Calculation of parameters

After that, from each test tire, a rubber test piece for viscoelasticity measurement of 20 mm in length, 4 mm in width and 1 mm in thickness was cut off from the inner liner layer inside the tread portion so that the tire circumferential direction was the long side. For each rubber test piece, using Eplexor series manufactured by GABO, complex elastic modulus $E^*_i$ (MPa) was measured under the conditions of measured temperature: 0 °C, initial strain:10%, dynamic strain: $\pm$1%, and frequency: 10 Hz, and deformation mode: tensile; and loss tangent (0°C tan $\delta$) was measured under the conditions of measured temperature: 0 °C, initial strain:10%, dynamic strain: $\pm$2.5%, and frequency: 10 Hz, and deformation mode: tension.

In addition, the complex elastic modulus $E^*_r$ (MPa) of the electronic component mounting member was measured in the same manner as above by cutting off a test piece for viscoelasticity measurement of 20 mm in length, 4 mm in

width and 1 mm in thickness from the joint portion. Further, Tg (°C), that is, $Tg_i$ (°C) and $Tg_r$ (°C) of each rubber composition of formulation 1 to formulation 13 were calculated by the following method.

A tan δ temperature distribution curve was measured using Eplexor series manufactured by GABO under the conditions of a frequency of 10 Hz, an initial strain of 10%, an amplitude of ±0.5%, and a heating rate of 2 °C/min. Then, the tan δ peak temperature corresponding to the largest tan δ value in the measured temperature distribution curve was defined as the glass transition point (Tg).

The results of each measurement are shown in Tables 1 and 2.

Then, $E^*_r$ / $E^*_i$ and $Tg_i$ - $Tg_r$ for each test tire were calculated based on the above measurement results. The results are shown in Tables 3 to 5. The complex elastic modulus, loss tangent, and Tg (°C) were measured for each manufactured test tire, and the average values are shown for those using the same rubber composition.

5. Evaluation test

Evaluation was performed on the peeling resistance during actual high-speed running.

(1) Test method

Each test tire is installed on all wheels of a vehicle (domestic FF vehicle, displacement 2000cc), and after filling air so that the internal pressure is 230kPa, it was overloaded, run on a dry road test course at a speed of 80 km/h, and run over projections provided on the road surface. After running, if the electronic component mounting member was peeled off from the tire bore surface was observed.

When the member was not peeled off, then the running speed was increased by 5 km/h and the same observation was made. Then, the same observation was repeated until the running speed reached a maximum of 140 km/h, and the speed at which the member was peeled off was obtained.

Then, the result in Comparative Example 5 was set to 100, and indexed based on the following formula to relatively evaluate the peeling resistance during actual high-speed running. The larger the numerical value, the better the peeling resistance during actual high-speed running, and the less likely it is to peel off.

$$\text{Peeling resistance during actual high-speed running} = [(\text{result of test tire}) / (\text{result of Comparative Example 5})] \times 100$$

(2) Evaluation results

Evaluation results are shown in Tables 3 to 5. In Tables 3 to 5, $E^*_i$, $E^*_r$, 0 °C tan $\delta_i$, $Tg_i$, and $Tg_r$ of each composition are shown again.

[Table 3]

| | EXAMPLE | | | | | |
|---|---|---|---|---|---|---|
| | 1 | 2 | 3 | 4 | 5 | 6 |
| Formulation of inner liner | Formulation number | | | | | |
| | 1 | 2 | 3 | 3 | 4 | 4 |
| Formulation of electronic component mounting materials | Formulation number | | | | | |
| | 9 | 9 | 9 | 9 | 9 | 9 |
| Polishing method | Buff polishing | Buff polishing | Buff polishing | Buff polishing | Buff polishing | Laser polishing |
| Parameter | | | | | | |
| Inner liner thickness $d_i$ (mm) | 0.4 | 0.4 | 0.4 | 0.7 | 0.7 | 0.7 |
| $E^*_i$ (Mpa) | 35.0 | 27.0 | 29.0 | 29.0 | 29.0 | 29.0 |

(continued)

| Parameter | | | | | | |
|---|---|---|---|---|---|---|
| $E^*_r$ (Mpa) | 25.0 | 25.0 | 25.0 | 25.0 | 25.0 | 25.0 |
| tan $\delta_i$ | 0.65 | 0.55 | 0.34 | 0.34 | 0.32 | 0.32 |
| $Tg_i$ (°C) | -30.0 | -28.0 | -26.0 | -26.0 | -35.0 | -35.0 |
| $Tg_r$ (°C) | -31.0 | -31.0 | -31.0 | -31.0 | -31.0 | -31.0 |
| $E^*_r$ / $E^*_i$ | 0.71 | 0.93 | 0.86 | 0.86 | 0.86 | 0.86 |
| $Tg_i$ - $Tg_r$ (°C) | 1.0 | 3.0 | 5.0 | 5.0 | -4.0 | -4.0 |
| Evaluation results | | | | | | |
| Peeling resistance during actual high-speed running | 110 | 120 | 125 | 140 | No peeling | No peeling |

[Table 4]

| | COMPARATIVE EXAMPLE | | | | |
|---|---|---|---|---|---|
| | 1 | 2 | 3 | 4 | 5 |
| Formulation of inner liner | Formulation number | | | | |
| | 5 | 6 | 7 | 7 | 8 |
| Formulation of electronic component mounting materials | Formulation number | | | | |
| | 9 | 9 | 9 | 9 | 9 |
| Polishing method | Buff polishing | Buff polishing | Buff polishing | Buff polishing | Buff polishing |
| Parameter | | | | | |
| Inner liner thickness $d_i$ (mm) | 0.4 | 0.4 | 0.4 | 0.7 | 0.7 |
| $E^*_i$ (Mpa) | 20.0 | 15.0 | 13.0 | 13.0 | 10.0 |
| $E^*_r$ (Mpa) | 25.0 | 25.0 | 25.0 | 25.0 | 25.0 |
| tan $\delta_i$ | 0.60 | 0.50 | 0.35 | 0.35 | 0.33 |
| $Tg_i$ (°C) | -25.0 | -24.0 | -23.0 | -23.0 | -32.0 |
| $Tg_r$ (°C) | -31.0 | -31.0 | -31.0 | -31.0 | -31.0 |
| $E^*_r$ / $E^*_i$ | 1.25 | 1.67 | 1.92 | 1.92 | 2.50 |
| $Tg_i$ - $Tg_r$ (°C) | 6.0 | 7.0 | 8.0 | 8.0 | -1.0 |
| Evaluation results | | | | | |
| Peeling resistance during actual high-speed running | 80 | 85 | 90 | 95 | 100 |

[Table 5]

| | EXAMPLE | | | | |
|---|---|---|---|---|---|
| | 7 | 8 | 9 | 10 | 11 |
| Formulation of inner liner | Formulation number | | | | |
| | 4 | 3 | 4 | 2 | 4 |

(continued)

| | EXAMPLE | | | | |
|---|---|---|---|---|---|
| | 7 | 8 | 9 | 10 | 11 |
| Formulation of electronic component mounting materials | Formulation number | | | | |
| | 9 | 10 | 11 | 12 | 13 |
| Polishing method | Buff polishing | Buff polishing | Buff polishing | Buff polishing | Buff polishing |
| Parameter | | | | | |
| Inner liner thickness $d_i$ (mm) | 1.0 | 1.0 | 1.0 | 1.0 | 1.0 |
| $E^*_i$ (Mpa) | 29.0 | 29.0 | 29.0 | 27.0 | 29.0 |
| $E^*_r$ (Mpa) | 25.0 | 27.0 | 24.0 | 23.0 | 21.0 |
| tan $\delta_i$ | 0.32 | 0.34 | 0.32 | 0.32 | 0.32 |
| $Tg_i$ (°C) | -35.0 | -26.0 | -35.0 | -28.0 | -35.0 |
| $Tg_r$ (°C) | -31.0 | -25.0 | -30.0 | -26.0 | -22.0 |
| $E^*_r$ / $E^*_i$ | 0.86 | 0.93 | 0.83 | 0.85 | 0.72 |
| $Tg_i$ - $Tg_r$ (°C) | -4.0 | -1.0 | -5.0 | -2.0 | -13.0 |
| Evaluation results | | | | | |
| Peeling resistance during actual high-speed running | No peeling | No peeling | No peeling | No peeling | No peeling |

From the comparison of Tables 3 and 4, it can be seen that tires exhibiting excellent peeling resistance during actual high-speed running can be provided, when $E^*_r / E^*_i < 1$ (Examples 1 to 6).

Further, from a comparison between Examples 1 to 11, it can be seen that the peeling resistance during actual high-speed running is more improved when 0 °C tan $\delta_i$ is 0.55 or less, and it is further improved when 0.35 or less.

Also, from a comparison of Examples 3 to 11, it can be seen that the peeling resistance during actual high-speed running is further improved, when $Tg_i - Tg_r < 0$ is satisfied.

In addition, from Examples 7 to 11, it can be seen that a tire with excellent peeling resistance during actual high-speed running can be provided when the inner liner thickness $d_i$ was increased to 1 mm, $E^*_r / E^*_i < 0.95$, and $Tg_i - Tg_r < -2.0$.

Although the present disclosure has been described above based on the embodiments, the present disclosure is not limited to the above embodiments. Various modifications can be made to the above embodiment within the same and equivalent range as the present disclosure.

The present disclosure (1) is;

a tire in which an electronic component mounting member for incorporating an electronic component is mounted on the surface of the tire inner member, wherein

the electronic component mounting member has an electronic component storage portion that stores the electronic component, and a joint portion that has a joint surface for mounting the electronic component mounting member to the surface of the tire inner member, and

the complex elastic modulus $E^*_r$ (MPa) of the joint portion at 0°C and the complex elastic modulus $E^*_i$ (MPa) of the tire inner member at 0°C satisfy the following (formula 1).

$$E^*_r / E^*_i < 1 \qquad \text{(formula 1)}$$

The present disclosure (2) is;
the pneumatic tire according to the present disclosure (1), wherein the loss tangent of tire inner member at 0°C (0°C tan $\delta_i$) is 0.55 or less.

The present disclosure (3) is;

the pneumatic tire according to the present disclosure (2), wherein the tire inner member has a loss tangent (0 °C tan $\delta_i$) of 0.35 or less.

The present disclosure (4) is the pneumatic tire of any combination of the present disclosures (1) to (3), which has at least one carcass layer radially inside the tread portion, and wherein the thickness $d_i$ (mm) from the radial inner surface of the radially innermost carcass layer to the radial inner surface of the tire inner member is 0.6 mm or more.

The present disclosure (5) is the pneumatic tire of any combination of the present disclosures (1) to (4), wherein the glass transition point $Tg_r$ (°C) of the joint portion and the glass transition point $Tg_i$ (°C) of the tire inner member satisfy the following (formula 2).

$$Tg_i - Tg_r < 0 \qquad \text{(Formula 2)}$$

The present disclosure (6) is the pneumatic tire of any combination of the present disclosures (1) to (5), wherein a side facing the joint surface is open in the electronic component storage portion of the electronic component mounting member.

The present disclosure (7) is the pneumatic tire of any combination of the present disclosures (1) to (6), wherein the electronic component mounting member is mounted on a surface of a tire inner member which was polished in advance.

The present disclosure (8) is the pneumatic tire of any combination of the present disclosures (1) to (7), the electronic component mounting member is mounted on the surface of the tire inner member using an adhesive.

The present disclosure (9) is the pneumatic tire of any combination of the present disclosures (1) to (8), wherein, in the tire cross-section, the center of said electronic component mounting member is located in the central two areas closest to the tire equatorial plane among the four areas divided by the lines extending parallel to the tire radial direction from the line that divides between the two ground contact edges forming the tread contact width into four equal parts.

The present disclosure (10) is the pneumatic tire of any combination of the present disclosures (1) to (9), which is a tire for passenger vehicles.

[Description of reference signs]

1 Tire
2 Electronic component mounting member
3 Surface of tread
11 Tread
12 Belt
13 Sidewall
14 Carcass layer
15 Bead core
16 Bead Apex
17 Chafer
18 Clinch
19 Tire inner member (inner liner)
21 Electronic component storage portion
22 Joint portion
31 Circumferential groove
32a, 32d Lateral groove
33 Sipes
34 Area closest to equatorial plane
35 Tire axially outer region
dt Tread thickness
dr Thickness of electronic component mounting member
A Joining surface
CL Tire center line
cl Center line of electronic component mounting member
D Diameter (outer diameter) of joint surface
$E_1$ Upper end (on the side facing the joint surface of the electronic component storage portion)
$E_2$ Lower end (on the joint surface side of the electronic component storage portion)

H Thickness (height) of electronic component mounting member
I Tire bore surface
m Deviation width from the center line CL of the center of the electronic component mounting member
S Storage space
T Thickness of joint portion
VL Virtual line
W Flange width

## Claims

1. A tire in which an electronic component mounting member for incorporating an electronic component is mounted on the surface of the tire inner member, wherein

    the electronic component mounting member has an electronic component storage portion that stores the electronic component, and a joint portion that has a joint surface for mounting the electronic component mounting member to the surface of the tire inner member, and
    the complex elastic modulus $E^*_r$ (MPa) of the joint portion at 0°C and the complex elastic modulus $E^*_i$ (MPa) of the tire inner member at 0°C satisfy the following (formula 1).

$$E^*_r / E^*_i < 1 \qquad \text{(formula 1)}$$

2. The pneumatic tire according to claim 1, wherein the loss tangent of tire inner member at 0°C (0°C tan 8i) is 0.55 or less.

3. The pneumatic tire according to claim 2, wherein the tire inner member has a loss tangent (0 °C tan 8i) of 0.35 or less.

4. The pneumatic tire according to any one of claims 1 to 3, which has at least one carcass layer radially inside the tread portion, and wherein the thickness $d_i$ (mm) from the radial inner surface of the radially innermost carcass layer to the radial inner surface of the tire inner member is 0.6 mm or more.

5. The pneumatic tire according to any one of claims 1 to 4, wherein the glass transition point $Tg_r$ (°C) of the joint portion and the glass transition point $Tg_i$ (°C) of the tire inner member satisfy the following (formula 2).

$$Tg_i - Tg_r < 0 \qquad \text{(Formula 2)}$$

6. The pneumatic tire according to any one of claims 1 to 5, wherein a side facing the joint surface is open in the electronic component storage portion of the electronic component mounting member.

7. The pneumatic tire according to any one of claims 1 to 6, wherein the electronic component mounting member is mounted on a surface of a tire inner member which was polished in advance.

8. The pneumatic tire according to any one of claims 1 to 7, the electronic component mounting member is mounted on the surface of the tire inner member using an adhesive.

9. The pneumatic tire according to any one of claims 1 to 8, wherein wherein, in the tire cross-section, the center of said electronic component mounting member is located in the central two areas closest to the tire equatorial plane among the four areas divided by the lines extending parallel to the tire radial direction from the line that divides between the two ground contact edges forming the tread contact width into four equal parts.

10. The pneumatic tire according to any one of claims 1 to 9, which is a tire for passenger vehicles.

[Fig. 1]

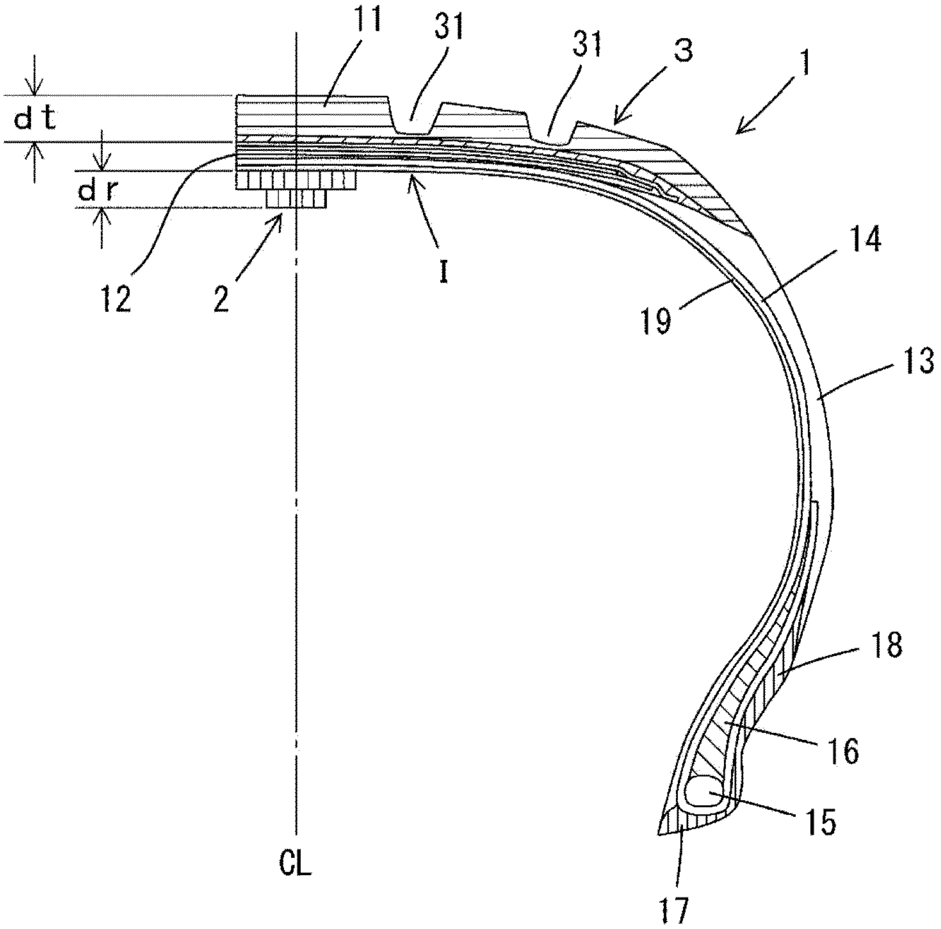

[Fig. 2]

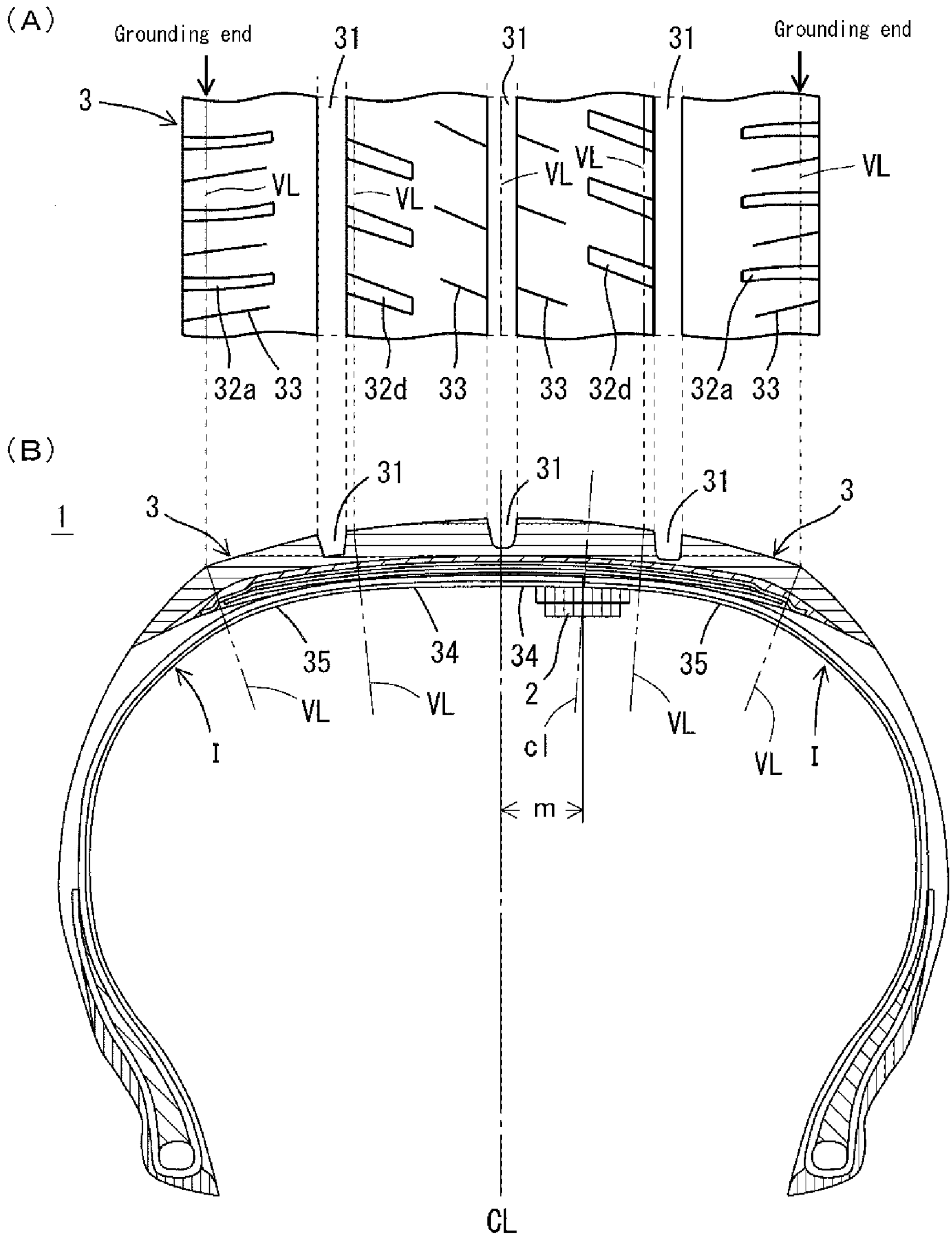
(A)
Grounding end
Grounding end
31
31
31
3
VL
VL
VL
VL
VL
32a 33
32d 33
33 32d
32a 33
(B)
1
3
31
31
31
3
35
34
34
2
35
VL
VL
VL
VL
I
I
cl
m
CL

[Fig. 3]

(A)

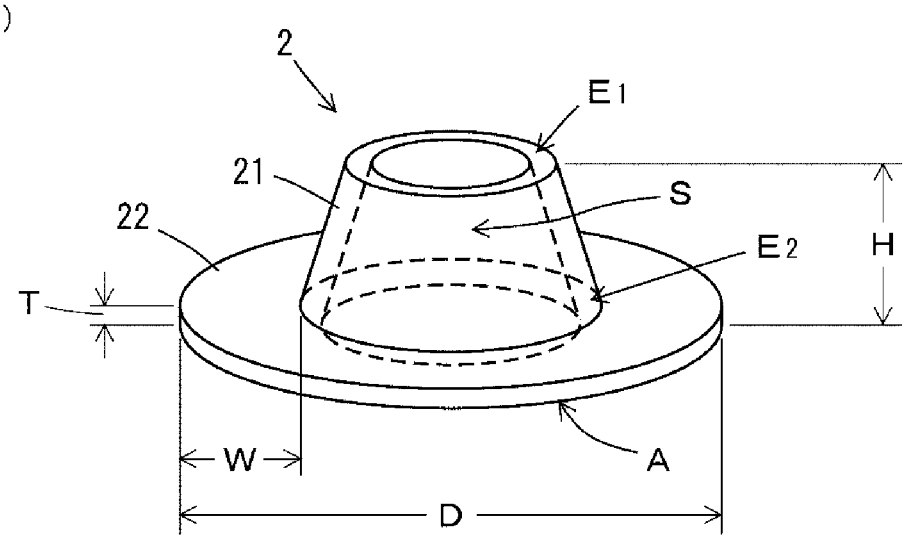


(B)

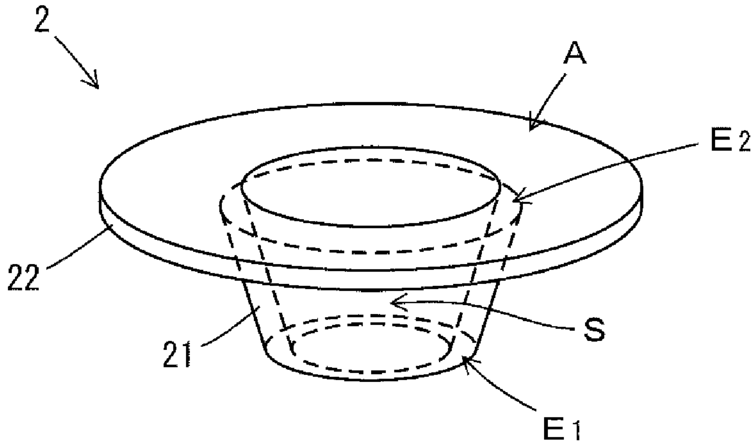


[Fig. 4]

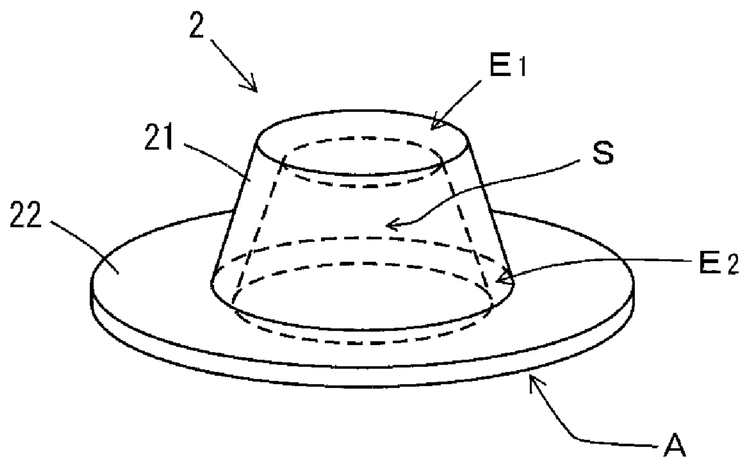

**INTERNATIONAL SEARCH REPORT**

International application No.
**PCT/JP2022/004000**

**A. CLASSIFICATION OF SUBJECT MATTER**

***B60C 19/00***(2006.01)i
FI: B60C19/00 B

According to International Patent Classification (IPC) or to both national classification and IPC

**B. FIELDS SEARCHED**

Minimum documentation searched (classification system followed by classification symbols)

B60C19/00-23/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br><br>Y | JP 2011-500443 A (SOCIETE DE TECHNOLOGIE MICHELIN) 06 January 2011 (2011-01-06)<br>claims, paragraphs [0005], [0021]-[0036] | 1, 6, 8-10<br><br><br>7 |
| Y | WO 2020/022160 A1 (THE YOKOHAMA RUBBER CO., LTD.) 30 January 2020 (2020-01-30)<br>paragraphs [0007], [0025], [0038] | 7 |
| A | JP 11-278021 A (BRIDGESTONE CORP.) 12 October 1999 (1999-10-12)<br>entire text | 1-10 |
| A | JP 2006-306171 A (BRIDGESTONE CORP.) 09 November 2006 (2006-11-09)<br>entire text | 1-10 |
| A | JP 2007-24696 A (BRIDGESTONE CORP.) 01 February 2007 (2007-02-01)<br>entire text | 1-10 |
| A | JP 2009-298327 A (BRIDGESTONE CORP.) 24 December 2009 (2009-12-24)<br>entire text | 1-10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 February 2022** | **15 March 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br><br>Telephone No. |

Form PCT/ISA/210 (second sheet) (January 2015)

**INTERNATIONAL SEARCH REPORT**

International application No.
**PCT/JP2022/004000**

**C. DOCUMENTS CONSIDERED TO BE RELEVANT**

| Category* | Citation of document, with indication, where appropriate, of the relevant passages | Relevant to claim No. |
|---|---|---|
| A | JP 2005-178761 A (SOC D TECHNOLOGIE MICHELIN) 07 July 2005 (2005-07-07) whole document | 1-10 |
| A | JP 2013-508209 A (REMA TIP TOP GMBH) 07 March 2013 (2013-03-07) whole document | 1-10 |

Form PCT/ISA/210 (second sheet) (January 2015)

**INTERNATIONAL SEARCH REPORT**
**Information on patent family members**

International application No.
**PCT/JP2022/004000**

| Patent document cited in search report | Publication date (day/month/year) | Patent family member(s) | Publication date (day/month/year) |
|---|---|---|---|
| JP 2011-500443 A | 06 January 2011 | US 2010/0276043 A1<br>claims, paragraphs [0004], [0023]-[0038]<br>WO 2009/056741 A2<br>FR 2922486 A1<br>CN 101835641 A<br>KR 10-2010-0091186 A<br>EA 201070510 A | |
| WO 2020/022160 A1 | 30 January 2020 | CN 112469578 A | |
| JP 11-278021 A | 12 October 1999 | US 2002/0046791 A1<br>EP 1321315 A1<br>BR 9900554 A<br>ZA 9900082 A<br>CA 2261330 A<br>AU 2003281373 A<br>MX PA05000408 A<br>KR 10-1999-0037830 A | |
| JP 2006-306171 A | 09 November 2006 | (Family: none) | |
| JP 2007-24696 A | 01 February 2007 | WO 2007/010755 A1 | |
| JP 2009-298327 A | 24 December 2009 | (Family: none) | |
| JP 2005-178761 A | 07 July 2005 | US 2005/0126668 A1<br>EP 1544001 A1<br>BR 405509 A<br>CN 1636773 A | |
| JP 2013-508209 A | 07 March 2013 | US 2012/0248274 A1<br>WO 2011/047791 A1<br>DE 102009050268 A<br>AU 2010310210 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018016185 A
- JP 2018199396 A
- JP 2019023594 A
- JP 2019026218 A